# EUROPEAN PATENT APPLICATION

(11) **EP 4 520 959 A1**
(43) Date of publication of application: **12.03.2025**
(21) Application number: 23195347.2
(22) Date of filing: 05.09.2023
(51) Int. Cl.: F03D 13/10, F03D 13/20, F03D 80/50, F03D 80/80

(54) **A TOWER FOR A WIND TURBINE**

(71) Applicant: Siemens Gamesa Renewable Energy A/S, 7330 Brande (DK)
(72) Inventor: Bertelsen, Frederik Jul, 7100 Vejle (DK)
(74) Representative: SGRE-Association

(57) **Abstract**

A tower (20) for a wind turbine comprising a plurality of tower sections (21, 22, 23, 24), a spacer (40) and a frame (50) is provided. The spacer (40) configured for allowing access to the tower and the frame (50) for coupling the tower (20) to a foundation. The spacer (40) comprises a first plate (60), a second plate (70), and at least one support element (80) arranged between the first plate (60) and the second plate (70). The first plate (60) and second plate (70) spaced apart to form at least one opening (90) to allow workers to enter the interior of the tower (20).

## Description

### FIELD OF THE INVENTION

The present invention relates to a tower for a wind turbine having a tower spacer between the lower part of the tower and the frame to allow workers to enter the interior of the tower.

### BACKGROUND OF THE INVENTION

Wind turbine towers are typically designed with a door opening. Some offshore wind turbines assembly includes a transition piece with a door. However, there are some towers or transition pieces that do not include a door opening and the access must be arranged underneath the lower section of the tower or in the tower flange in such a case.

A typical disadvantage of such known towers is that when maintenance is required, the tower must be lifted to allow workers to access to the interior of the tower and perform the maintenance tasks.

It is therefore a goal of the present invention to provide a tower for a wind turbine with a spacer arranged between the frame and the lower space of the tower, in which the spacer has an opening configured for access to allow workers and the HV-cables to enter the interior of the tower, which overcomes the above-mentioned disadvantages.

### SUMMARY OF THE INVENTION

The object of the invention is achieved by the independent claims. The dependent claims describe advantageous developments and modifications of the invention.

In accordance with the invention there is provided a tower for a wind turbine comprising a plurality of tower sections, a spacer for allowing access to the tower and a frame for coupling the tower to a foundation. The spacer is arranged between the frame and a lower tower section of the plurality of tower sections. The spacer comprises a first plate, a second plate and at least one support element. The first plate is coupled to a flange of the lower tower section and the second plate is coupled to the frame. The at least one support element is arranged between the first plate and the second plate and coupled to both the first plate and the second plate. The first plate and the second plate are spaced apart to form at least one opening, the opening is configured to allow workers to enter the interior of the tower.

By having a spacer arranged between the frame and the lower tower section, the tower can be accessed easily by workers through the opening formed by the first and the second plate.

The tower spacer allows to have a permanent access, preventing to lift the tower with a crane to access underneath the tower every time that the tower needs to be accessed e.g., due a maintenance task, which is a costly and complex operation.

In an example, the spacer may comprise a plurality of support elements arranged between the first plate and the second plate. The support elements may be coupled to both the first plate and the second plate.

In an example, the spacer may comprise a plurality of openings formed between the plurality of support elements.

In an example, the at least one of the plurality of openings may be configured for the passage of HV-cables.

Some openings may be assigned only for HV-cables and others only for worker access to prevent accidents, e.g., worker tripping over a cable.

In an example, the tower may comprise a plurality of spacers arranged between the frame and the lower tower section.

By having a plurality of spacers arranged between the frame and the lower tower section, there may be a plurality of access to the interior of the tower. Thereby, a worker may save time by entering the tower by the nearest access. In the same way, the HV-cables may be introduced into the nearest access, preventing surrounding the tower which may require longer cables.

In an example, the spacer may further comprise a tower guiding element arranged at the first plate for aligning the spacer with the lower tower section during installation.

In an example, the spacer may further comprise at least one forklift pocket for transporting the spacer during installation.

By having a forklift pocket, the spacer can be easily and securely gripped by a crane, preventing the spacer from slipping.

In an example, the first plate may comprise holes and fastening means inserted in the holes for coupling the first plate with the lower tower section.

In an example, the second plate may comprise holes and fastening means inserted in the holes for coupling the second plate with the frame.

In an example, the fastening means are semi-permanent joining means such as bolts, screws, pins, rivets, threads, studs, or other longitudinal pieces which can be used as fasteners.

In a further aspect, a wind turbine comprising a generator, a foundation, a nacelle, and a tower is provided. The frame of the tower is coupled to the foundation and an upper tower section of the plurality of tower sections is coupled to the nacelle.

Advantageous configurations and embodiments of the tower according to the invention follow from the claims dependent on claim 1 and claim 11 as well as the following description. The advantageous features of the tower and the wind turbine can generally be combined.

### BRIEF DESCRIPTION OF THE DRAWINGS

Embodiments of the invention are now described, by way of example only, with reference to the accompanying drawings, of which:
- Fig.1: shows a wind turbine;
- Fig. 2: shows a tower of a wind turbine; and
- Fig. 3a and 3b: shows a front view of a spacer; and
- Fig. 4: shows a perspective view of a spacer; and
- Fig. 5: shows a perspective view of a spacer with a guiding element and forklift pockets; and
- Fig. 6: shows a frame with a plurality of tower spacers.

The illustration in the drawings is in schematic form. It is noted that in different figures, similar or identical elements may be provided with the same reference signs.

### DESCRIPTION OF THE DRAWINGS

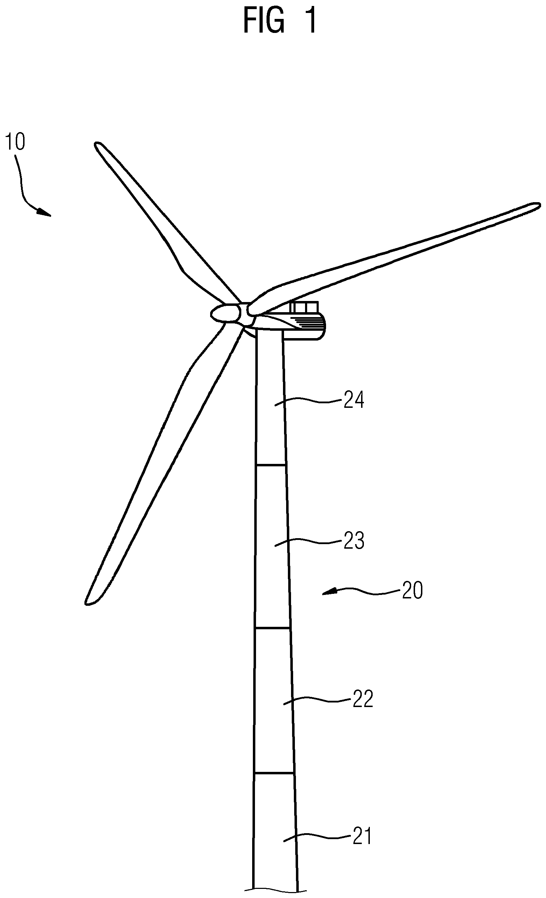

Fig. 1 shows a wind turbine 10 with a tower 20, a nacelle and at least one rotor blade. The tower 20 comprising a plurality of tower sections 21, 22, 23 and 24.

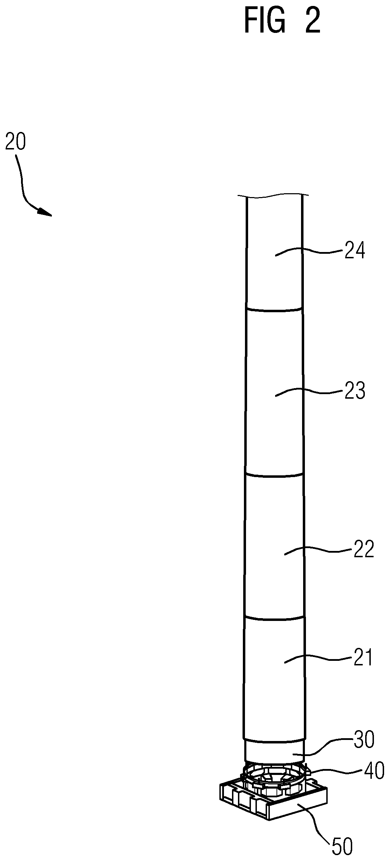

Fig. 2 shows a tower 20 of a wind turbine. The lower tower section 21 is connected to a tower flange 30 or directly connected to a frame 50, which is for coupling the tower 20 to a foundation. At least one spacer 40 is arranged between the frame 50 and a lower tower section 21 or the tower flange 30. A plurality of spacers may be arranged between the frame 50 and the lower tower section 21 or the tower flange 30.

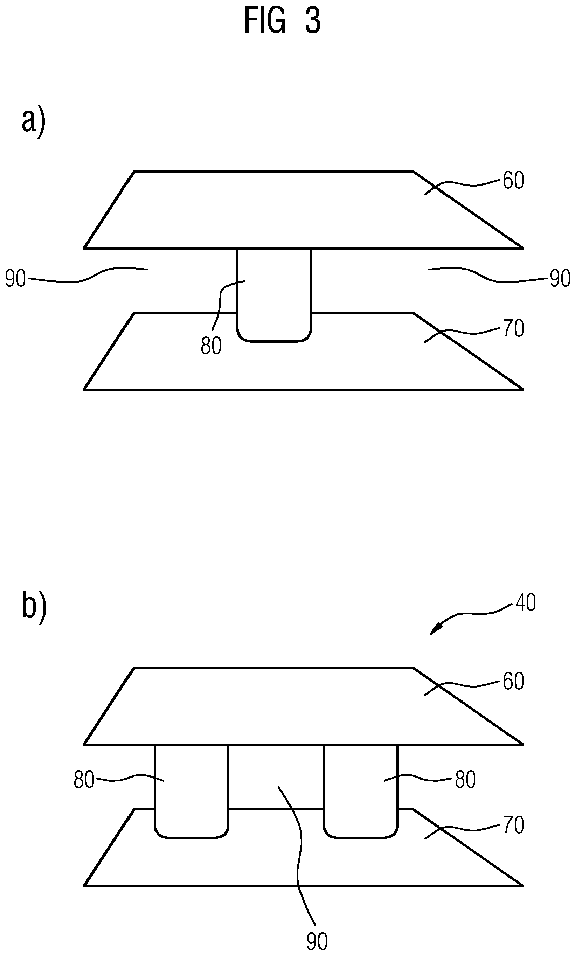

Fig. 3a and Fig. 3b shows a front view of the spacer 40. The spacer 40 comprises a first plate 60, a second plate 70, at least one support element 80 and at least one opening 90. The first plat 60 and the second plate 70 are arranged parallel to each other and spaced apart to form at least one opening 90. The at least one support element 80 is arranged between the first plate 60 and the second plate 70 and coupled to both the first plate 60 and the second plate 70. The first plat 60 and the second plate 70 may have the same or similar size and may have squared, rectangular or trapezoidal shape. The spacer 40 may be made of concrete or a metallic material.

In Fig. 3a the spacer 40 comprises only one support element 80 arranged between first plate 60 and the second plate 70 and may be place at the center of the plates, having the spacer 40 an I-shape and thereby having two openings 90, each opening 90 on each side of the support element 80.

In Fig.3b the spacer 40 comprises at least one support element 800. The support elements 80 may be arranged at the ends of the first plate 60 and second plate 70, forming an opening 90 between the support elements 80. The opening 90 s configured to allow workers to enter the interior of the tower.

Some openings 90 may be configured for the passage of HV-cables.

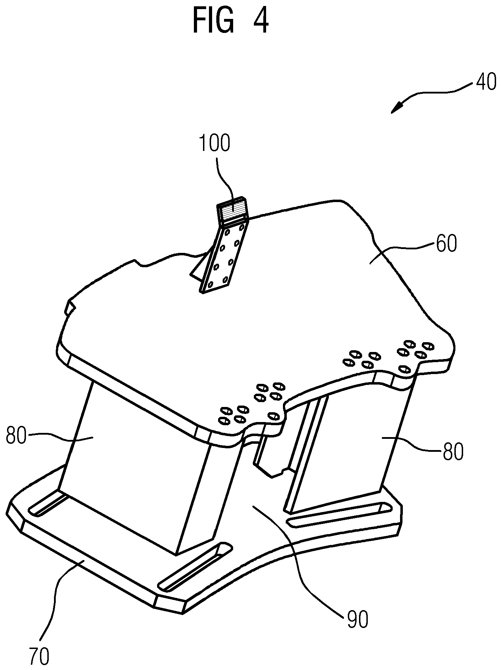

Fig. 4 shows a perspective view of the spacer 40. A guiding element 100 may be arranged at the first plate 60 for aligning the spacer 40 with the lower tower section 21 during installation. The guiding element 100 may be arranged at the middle of the first plate 60. In case the tower 20 comprise a tower flange 40, the guiding element 100 may be configured to be aligned with the tower flange 30. The tip of the guiding element 100 may have a different color to identify the guiding element 100 faster.

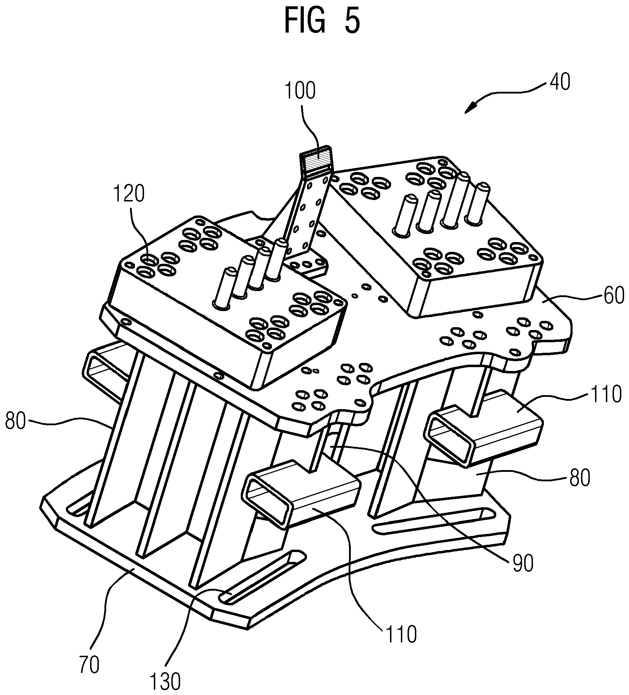

Fig. 5 shows a perspective view of a spacer with a guiding element 110 and forklift pockets 110. The spacer 40 may further comprise forklift pockets 110 for transporting the spacer 40 during installation. The forklift pockets 110 may be arranged at the outer side of the support elements 80. The forklift pockets 110 may have a square, rectangular or a certain shape to facilitate the spacer 40 to be gripped by the crane and prevent the spacer from slipping.

The first plate 60 may have holes 120 and fastening means inserted in the holes 120 for coupling the first plate 60 with the lower tower section 21 or to the tower flange 30. The first plate holes 120 may be distributed at the perimeter or at the corners of the first plate 60.

The second plate 70 may have holes 130 and fastening means inserted in the holes 130 for coupling the second plate 70 with the frame 50. The holes 130 may have an elongated shape and may be placed at the corners of the second plate 70. The fastening means are semi-permanent joining means such as bolts, screws, pins, rivets, threads, studs, or other longitudinal pieces which can be used as fasteners.

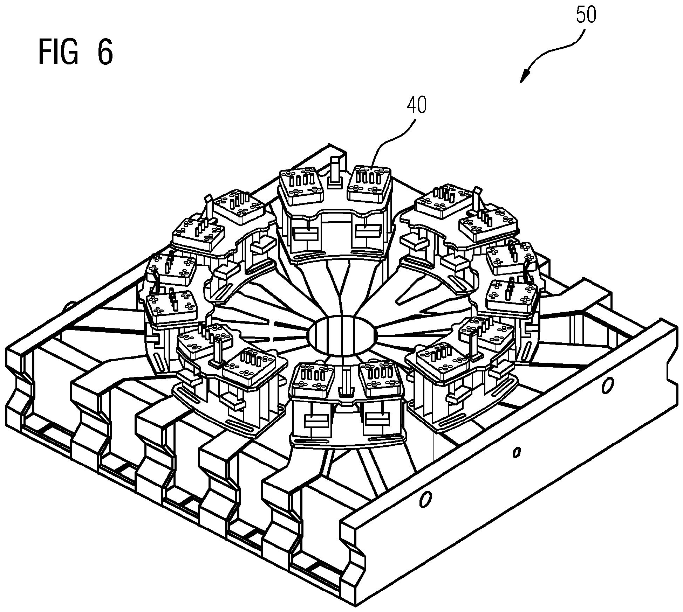

Fig. 6 shows a frame 50 with a plurality of tower spacers 40. A plurality of tower spacers 40 may be arranged in the frame 50 and may be arranged forming a circle to match with the lower tower section or to the tower flange. The plurality of tower spacers 40 may be arranged next to each other or may be arranged leaving a gap in between them.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

It should be noted that the use of "a" or "an" throughout this application does not exclude a plurality, and "comprising" does not exclude other steps or elements. Also elements described in association with different embodiments may be combined. It should also be noted that reference signs in the claims should not be construed as limiting the scope of the claims.

## Claims

1. A tower (20) for a wind turbine (10) comprising a plurality of tower sections (21, 22, 23, 24), a spacer (40) for allowing access to the tower (20) and a frame (50) for coupling the tower (20) to a foundation,
wherein the spacer (40) is arranged between the frame (50) and a lower tower section (21) of the plurality of tower sections (21, 22, 23, 24),
wherein the spacer (40) comprises:
- a first plate (60) coupled to a flange (30) of the lower tower section (21),
- a second plate (70) coupled to the frame (50), and
- at least one support element (80) arranged between the first plate (60) and the second plate (70) and coupled to both the first plate (60) and the second plate (70), **characterized in that**
the first plate (60) and the second plate (70) are spaced apart to form at least one opening (90),
wherein the opening (90) is configured to allow workers to enter the interior of the tower (20).

2. The tower (20) according to claim 1, wherein the spacer (40) comprises a plurality of support elements (80) arranged between the first plate (60) and the second plate (70) and coupled to both the first plate (60) and the second plate (70) .

3. The tower (20) according to claim 2, wherein the spacer (40) comprises a plurality of openings (90) formed between the plurality of support elements (80).

4. The tower (20) according to claim 3, wherein at least one of the plurality of openings (90) is configured for the passage of HV-cables.

5. The tower (20) according to any of the preceding claims, wherein said tower (20) comprises a plurality of spacers (40) arranged between the frame (50) and the lower tower section (21) .

6. The tower (20) according to any of the preceding claims, wherein the spacer (40) further comprises a tower guiding element (100) arranged at the first plate (60) for aligning the spacer (40) with the lower tower section (21) during installation.

7. The tower (20) according to any of the preceding claims, wherein the spacer (40) further comprises at least one forklift pocket (110) for transporting the spacer (40) during installation.

8. The tower (20) according to any of the preceding claims, wherein the first plate (60) comprises holes (120) and fastening means inserted in the holes (120) for coupling the first plate (60) with the lower tower section (21).

9. The tower (20) according to any of the preceding claims, wherein the second plate (70) comprises holes (130) and fastening means inserted in the holes (130) for coupling the second plate (70) with the frame (50).

10. The tower (20) according to claim 8 or 9, wherein the fastening means are semi-permanent joining means such as bolts, screws, pins, rivets, threads, studs, or other longitudinal pieces which can be used as fasteners.

11. A wind turbine (10) comprising a generator, a foundation, a nacelle and a tower (20) according to any of the claims 1 to 10, wherein the frame (50) of the tower (20) is coupled to the foundation and an upper tower section (24) of the plurality of tower sections (21, 22, 23, 24) is coupled to the nacelle.
